# EUROPEAN PATENT SPECIFICATION

(11) **EP 1 635 256 B1**
(45) Date of publication and mention of the grant of the patent: **09.01.2008**
(21) Application number: 05003574.0
(22) Date of filing: 18.02.2005
(51) Int. Cl.: G06F 9/445, H04L 29/08

(54) **Communication system and method for upgrade of user terminal software and user terminal upgraded by same**
Kommunikationssystem and Verfahren zur Aktualisierung von Software in einem Endbenutzergerät
Système et procédé pour l'actualisation de logiciels dans un terminal d'utilisateur final

(30) Priority: 09.09.2004 KR 2004072234
(43) Date of publication of application: 15.03.2006
(73) Proprietor: SAMSUNG ELECTRONICS CO., LTD., Suwon-si, Gyeonggi-do (KR)
(72) Inventor: Seo, Jin-Won, Yeongtong-gu Suwon-si Gyeonggi-do (KR); Park, Yun-Sang, Yeongtong-gu Suwon-si Gyeonggi-do (KR); Hyon, Tae-In, Yeongtong-gu Suwon-si Gyeonggi-do (KR); Kim, Jai-Dong, Yeongtong-gu Suwon-si Gyeonggi-do (KR); Park, Jeong-Eun, Yeongtong-gu Suwon-si Gyeonggi-do (KR); Lee, Jin-Young, Yeongtong-gu Suwon-si Gyeonggi-do (KR); Lee, Yong, Yeongtong-gu Suwon-si Gyeonggi-do (KR)
(74) Representative: Grünecker, Kinkeldey, Stockmair & Schwanhäusser Anwaltssozietät

(56) References cited:
- US-A- 5 752 042
- US-A1- 2004 073 902
- US-B1- 6 308 061
- US-B1- 6 697 851

## Description

The present invention relates to a software upgrade of a wireless terminal, and more particularly to a software upgrade of a wireless terminal through a wireless communication network.

A wireless mobile Internet system is similar to a cellular network. To upgrade the software of a user terminal (UT) in a cellular network, a centralized server managing the software versions of all user terminals integrally downloads configuration files necessary for a software upgrade to user terminals requiring the software upgrade.

However, it is hard to easily manage such a centralized server. In addition, the centralized server is not well adapted to current cellular networks due to certain characteristics of the server. Further, in contrast with a cellular network, a wireless mobile internet system can transmit data at a high speed, and each user terminal is based on an Internet protocol (IP) address. Furthermore, since a user terminal, which is a wireless communication apparatus, can use all services on a wired network, it may become necessary to upgrade the software of the user terminal in order to solve security and virus problems.

US 6 308 061 B1 discloses a wireless communication system and method in which software upgrades are wirelessly transmitted to a mobile device based on the determination of whether such an upgrade is necessary. The mobile device includes a software update schedule table for providing one or more times at which the mobile device is to inquire and obtain available software upgrades. A FTP server or, alternatively, a TFTP server maintains the most current versions of all mobile terminal operating software. When a mobile terminal within the system initially powers up or is reset, the mobile terminal goes through an initialization or boot up routine. Each routine includes communicating with a host computer via a selected base station in order that the host computer provides the mobile terminal with its Internet Protocol, IP address as is conventional. In a first embodiment, document D1 discloses that when the mobile terminal undergoes its boot up initialization routine, the mobile terminal transmits a BOOTP request packet to the host computer. In response, the host computer generates and transmits a BOOTP response packet back to the mobile terminal. Alternatively to the BOOTP protocol, DHCP could be used for this boot up procedure. Following this boot up routine, the host computer may transmit a version request packet at some predetermined time after the boot up routine or may periodically send a version request packet to the mobile terminal at multiple random or preset times. Following the receipt of a version response packet transmitted from the mobile terminal to the host computer, the host computer performs a comparison between the version indicator stored in the version indicator field and the version of the corresponding operating software stored in the FTP server. In a second embodiment following the receipt of the BOOTP response packet, the mobile terminal transmits a package request packet to the host computer. The purpose of the package request packet is to prompt the host computer to transmit back to the mobile terminal a package definition packet, which includes the contents of the package definition file. Upon receiving the package definition packet, the mobile terminal processor initially compares the version identifier included in the package definition field with the version identifier previously stored by the processor the last time the mobile terminal downloaded files from the host computer

Accordingly, it is the object of the present invention to provide a user terminal and a communication system and a method for efficiently determining whether upgrading a software of the user terminal in a wireless mobile internet network is necessary.

This object is solved by the subject matter of the independent claims.

Preferred embodiments are defined in the dependent claims.

According to an aspect of the present invention, there is provided a communication system for software upgrade including: a user terminal for transmitting an IP address assignment request message containing software information of the UT; an upgrade-providing server including upgrade data regarding every software of the user terminal; and a server for determining whether software upgrade of the user terminal is necessary with reference to the software information when the request message is received, and transmitting an address and upgrade information of the upgrade- providing server to the UT when the software upgrade is necessary.

According to another aspect of the present invention, there is provided a method for upgrading software of a UT in a communication system including a server, the method including the steps of: inserting software information into a Dynamic Host Configuration Protocol (DHCP) request message when a DHCP processing request is generated and transmitting the DHCP request message; and connecting to an upgrade- providing server based on an address of the upgrade-providing server received from the server, and receiving upgrade data, when it is determined that upgrade of the software is necessary with reference to the software information.

The above object and other aspects, features and advantages of the present invention will be more apparent from the following detailed description taken in conjunction with the accompanying drawings, in which:
FIG. 1 is a block diagram of a wireless mobile Internet system to which the present invention is applied;
FIG. 2 is a flow diagram illustrating message flow in a wireless mobile Internet system in upgrading software according to an embodiment of the present invention;
FIG. 3 is a block diagram of a UT according to one embodiment of the present invention;
FIG. 4 is a flow chart illustrating control flow in upgrading software of a UT according to an embodiment of the present invention;
FIG. 5 is a view showing a structure of a DHCP request message; and
FIG. 6 is a flow chart illustrating control flow in a DHCP server in upgrading software according to an embodiment of the present invention.

Hereinafter, a preferred embodiment of the present invention will be described with reference to the accompanying drawings. In the following description of the present invention, a detailed description of known functions and configuration incorporated herein will be omitted when it may make the subject matter of the present invention unclear.

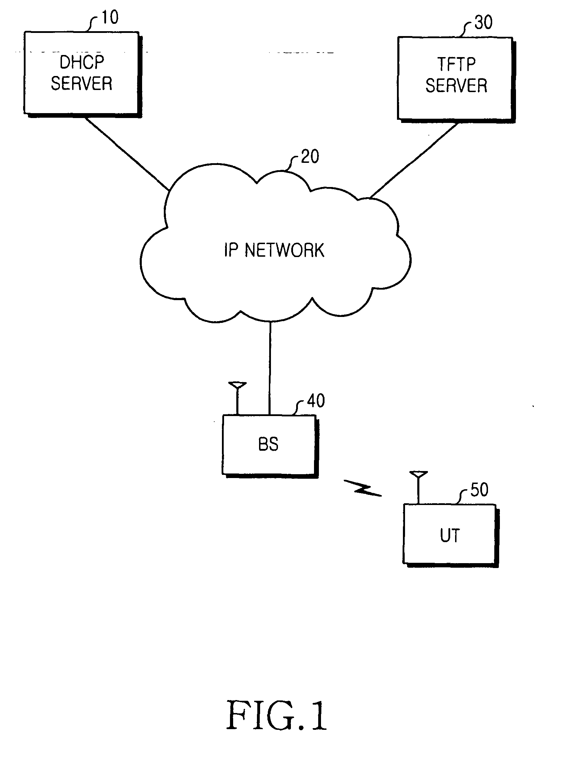

FIG. 1 is a block diagram of a wireless mobile Internet system to which the present invention is applied. The wireless mobile Internet system includes a Dynamic Host Configuration Protocol (DHCP) server 10, an IP network 20, a Trivial File Transfer Protocol (TFTP) server 30, a base station 40 and a UT 50. The UT 50 connects to the IP network 20 through the base station 40 and can communicate with the DHCP server 10 and the TFTP server 30.

The DHCP server 10 assigns an IP address to the user terminal 50 and enables the user terminal 50 to connect to the Internet through the IP network 20. The UT 50 may perform a procedure defined in the DHCP mechanism (IETF RFC 2131) (Internet Engineering Task Force Request For Comment) in order to receive the IP address. When transmitting a DHCP request message requesting the IP address to the DHCP server 10, the user terminal 50 inserts the name of a configuration file into the file field of the DHCP request message and transmits the DHCP request message to the DHCP server 10. Generally, the name of the configuration file includes version information of the configuration file. Further, when receiving the DHCP request message from the UT 50, the DHCP server 10 transmits a DHCP response message for assigning the IP address to the user terminal 50.

The DHCP server 10 determines whether or not the configuration file version of the UT 50 is the latest version with reference to the configuration file version information of the UT 50 contained in the DHCP request message transmitted from the UT 50. The DHCP server 10 periodically communicates with the TFTP server 30 and receives information on a configuration file of the latest version. In other words, when the configuration file has been upgraded, the TFTP server 30 provides the DHCP server 10 with the configuration file information of the latest version.

The DHCP server 10 determines whether or not the configuration file version of the UT 50 contained in the DHCP request message is the latest version with reference to the above configuration file information of the latest version. When the configuration file of the UT 50 is not a configuration file of the latest version, the DHCP server 10 inserts a configuration file name of the latest version into the file field of the DHCP response message and transmits the DHCP response message to the UT 50. Herein, the DHCP response message includes the IP address of the TFTP server 30. The IP address of the TFTP server 30 contained in the DHCP response message is used in a bootstrap process later. Further, the IP address of the TFTP server 30 is used when the UT 50 connects to the TFTP server 30 and receives a configuration file of the latest version.

In contrast, when the configuration file of the user terminal 50 is the configuration file of the latest version, the DHCP server 10 transmits a DHCP response message having the existing construction to the user terminal 50. It should also be noted the term "existing construction" represents that the DHCP server 10 transmits the DHCP response message having the information contained in the DHCP request message (latest version). The UT 50 determines whether the software information contained in the DHCP response message is the latest version or not, so that UT 50 determines the necessity of a software upgrade. Since the information contained in the DHCP request message is the latest version, there is no necessity of the software upgrade . Therefore, the DHCP server 10 transmits the DHCP response message having the information of the latest version received from the UT 50.

When receiving the DHCP response message from the DHCP server 10, the UT 50 determines whether or not the configuration file information of the latest version has been contained in the DHCP response message. That is, the UT 50 determines the necessity of a software upgrade. When the configuration file information of the latest version is contained in the DHCP response message, the UT 50 connects to the TFTP server 30 by means of the IP address of the TFTP server 30 contained in the DHCP response message. Herein, communication between the TFTP server 30 and the user terminal 50 may be performed by the procedure defined in a TFTP mechanism (IETF RFC 783 and IETF RFC 1350. The TFTP server 30 does not require a user account and password when the user terminal 50 connects to the TFTP server 30.

The UT 50, having connected to the TFTP server 30, requests that the TFTP server 30 transmit the configuration file of the latest version necessary for the UT 50. When receiving the transmission request of the configuration file, the TFTP server 30 generates a new configuration file necessary for the UT 50 with reference to the transmission request and transmits the generated configuration file to the user terminal 50. Accordingly, the UT 50 receives the configuration file of the latest version necessary for the software upgrade from the TFTP server 30 and decodes the received configuration file, thereby performing the software upgrade.

Meanwhile, the UT 50 periodically communicates with the DHCP server 10 according to the DHCP mechanism (IETF RFC 2131). In order to continuously use the IP address assigned from the DHCP server 10, the UT 50 must take a certification from the DHCP server 10. Thus, the UT 50 transmits the DHCP request message to the DHCP server 10 and the DHCP server 10 sends an ACK message or an NACK message in response to the DHCP request message. Even in such a communication with the DHCP server 10, the UT 50 inserts the name of the configuration file into the file field of the DHCP request message and transmits the DHCP request message to the DHCP server 10. Accordingly, the DHCP server 10 can periodically monitor the state of a software upgrade. As described above, when it is determined that an upgrade is necessary in consideration of the configuration file information transmitted from the UT 50, the DHCP server 10 transmits the IP address of the TFTP server 30 and configuration file information of the latest version necessary for the upgrade through an ACK message or an NACK message.

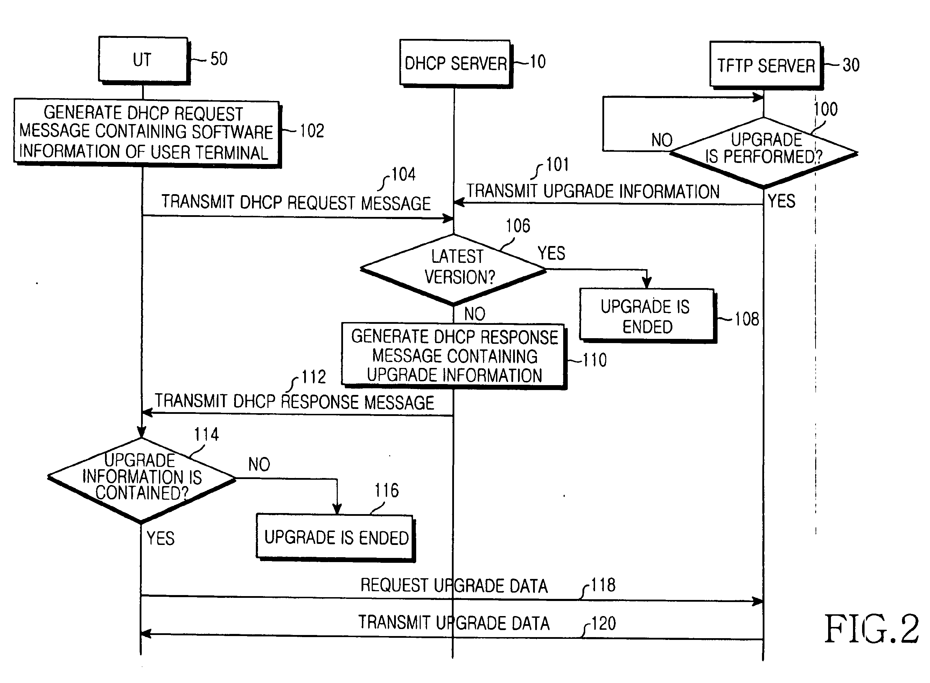

Hereinafter, message flow among the DHCP server 10, the TFTP server 30 and the UT 50 in upgrading the software of the UT 50 will be described with reference to FIG. 2.

Referring to FIG. 2, in step 102, the 50 generates a DHCP request message requesting an IP address when it is necessary to access the Internet. In addition, the 50 can generate a DHCP request message requesting certification for continuously using an IP address assigned from the DHCP server 10.

Herein, the UT 50 generates the DHCP request message containing configuration file information. Such configuration file information can be inserted into the file field of the DHCP request message and the configuration file information can include a configuration file name, a configuration file version, etc. Further, the UT 50 transmits the DHCP request message to the DHCP server 10 in step 104. When receiving the DHCP request message from the UT 50, the DHCP server 10 determines whether or not the configuration file version of the UT 50 is the latest version with reference to the configuration file information of the UT 50 contained in the DHCP request message, in step 106.

Since the DHCP server 10 periodically communicates with the TFTP server 30 and receives information on the configuration file of the latest version, the DHCP server 10 is assumed to have already known the configuration file information of the latest version. In detail, the TFTP server 30 determines whether or not the configuration file has been upgraded in step 100. When the configuration file has been upgraded, the TFTP server 30 provides the DHCP server 10 with the configuration file information of the latest version, in step 101.

Meanwhile, when the configuration file of the UT 50 is not the configuration file of the latest version, the DHCP server 10 generates a DHCP response message containing the configuration file information of the latest version in step 110. In addition, when receiving the DHCP request message requesting the certification for using the IP address, the DHCP server 10 generates an ACK message or an NACK message.

In addition, when the configuration file of the UT 50 is the configuration file of the latest version, the DHCP server 10 proceeds to step 108 and ends the upgrade process.

For example, the DHCP server 10 inserts the configuration file information of the latest version into the file field of the DHCP response message. The DHCP response message includes the IP address of the TFTP server 30. In addition, the DHCP server 10 may insert the configuration file information of the latest version into the ACK message or the NACK message. In such a case, it is assumed that the IP address of the TFTP server 30 has been provided to the UT 50 during the initial assignment of an IP address. However, the DHCP server 10 may provide the IP address of the TFTP server 30 to the UT 50 through the ACK message or the NACK message. The IP address of the TFTP server 30 enables the UT 50 to connect to the TFTP server 30 and to receive the configuration file of the latest version. Next, the DHCP server 10 transmits the DHCP response message to the UT 50 in step 112.

When receiving the DHCP response message from the DHCP server 10, the UT 50 determines whether or not the configuration file information of the latest version has been contained in the DHCP response message, in step 114. When the configuration file information of the latest version has been contained in the DHCP response message, the UT 50 connects to the TFTP server 30 by means of the IP address of the TFTP server 30 contained in the DHCP response message in step 118 and requests that the TFTP server 30 transmit the configuration file of the latest version to the UT 50. When receiving the transmission request of the configuration file from the UT 50, the TFTP server 30 generates and transmits the configuration file of the latest version necessary for the user terminal 50 in step 120. Accordingly, the user terminal 50 receives the configuration file of the latest version necessary for a software upgrade from the TFTP server 30 and decodes the received configuration file, thereby performing the software upgrade. Alternatively, if the configuration file information of the latest version is not contained in the DHCP response message in step 114, the UT proceeds to step 116 and ends the upgrade process.

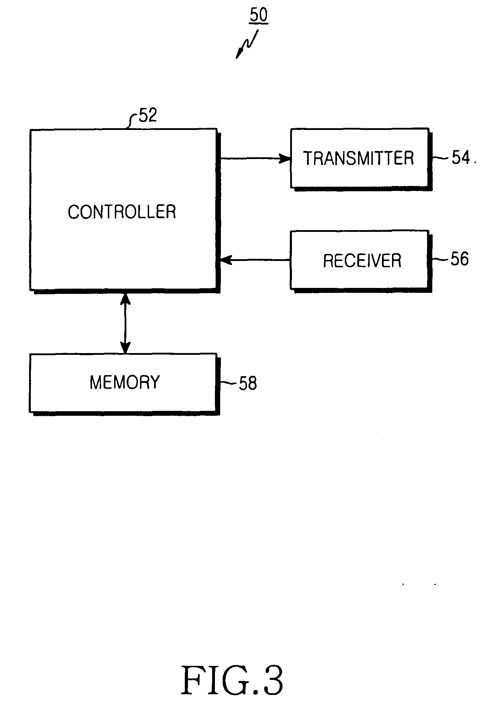

Hereinafter, the construction and the operation of the user terminal 50 according to one embodiment of the present invention will be described with reference to FIG. 3.

The UT 50 includes a controller 52, a transmitter 54, a receiver 56 and a memory 58. When a DHCP processing request is generated, the controller 52 generates a DHCP request message and transmits the DHCP request message to the DHCP server 10 through the transmitter 54. As described above, in generating the DHCP request message, the controller 52 inserts configuration file information into the file field of the DHCP request message and transmits the DHCP request message to the DHCP server 10. Meanwhile, when receiving a DHCP response message from the DHCP server 10 through the receiver 56, the controller 52 determines whether or not configuration file information of the latest version has been contained in the DHCP response message. When the configuration file information of the latest version has been contained in the DHCP response message, the controller 52 connects to the TFTP server 30, receives the configuration file of the latest version from the TFTP server 30, decodes the received configuration file, thereby performing a software upgrade. Furthermore, the controller 52 stores the configuration file and related information in the memory 58.

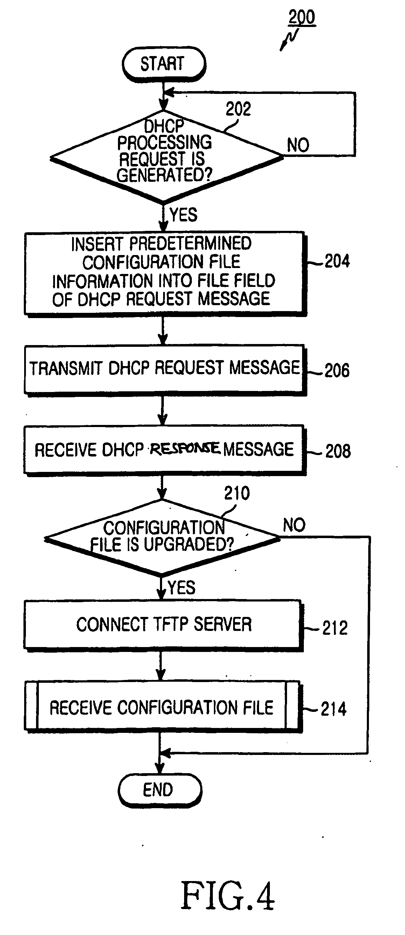

Hereinafter, control flow in the software upgrade in the UT 50 constructed as described above will be described with reference to FIG. 4.

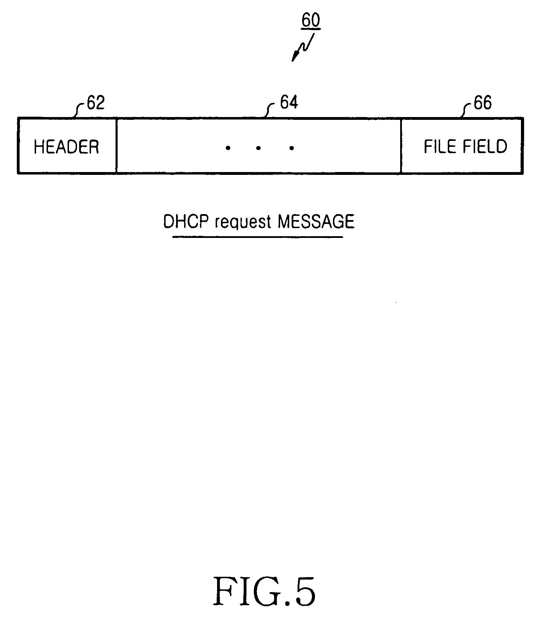

Referring to FIG. 4, in step 202, the UT 50 determines whether or not a DHCP processing request is generated. When requesting an IP address or a certification for using an IP address assigned in advance, the UT 50 requests DHCP processing. When the DHCP processing request is generated, the UT 50 inserts predetermined configuration file information into the file field of a DHCP request message in step 204. FIG. 5 shows the structure of such a DHCP request message. Referring to FIG. 5, the DHCP request message 60 includes a header 62, a file field 66, and other file fields 64. According to an embodiment of the present invention, the file field 66 of the DHCP request message 60 includes configuration file information. The configuration file information may include the configuration file name and, the configuration file version, etc., as described above. That is, the UT 50 generates the DHCP request message including the configuration file information in step 204 and transmits the generated DHCP request message to the DHCP server 10 in step 206. Next, when receiving a DHCP response message from the DHCP server 10 in step 208, the UT 50 determines whether or not configuration file information of the latest version has been contained in the DHCP response message in step 210.

That is, in step 210, the UT 50 determines whether or not a configuration file has been upgraded. When the configuration file has been upgraded, the UT 50 connects to the TFTP server 30 by means of the IP address of the TFTP server 30 contained in the DHCP response message and requests that the TFTP server 30 transmit a configuration file of the latest version necessary for the UT 50, in step 212. Further, when the TFTP server 30 transmits the configuration file of the latest version necessary for the UT 50 according to the transmission request of the configuration file of the latest version, the UT 50 receives the configuration file in step 214.

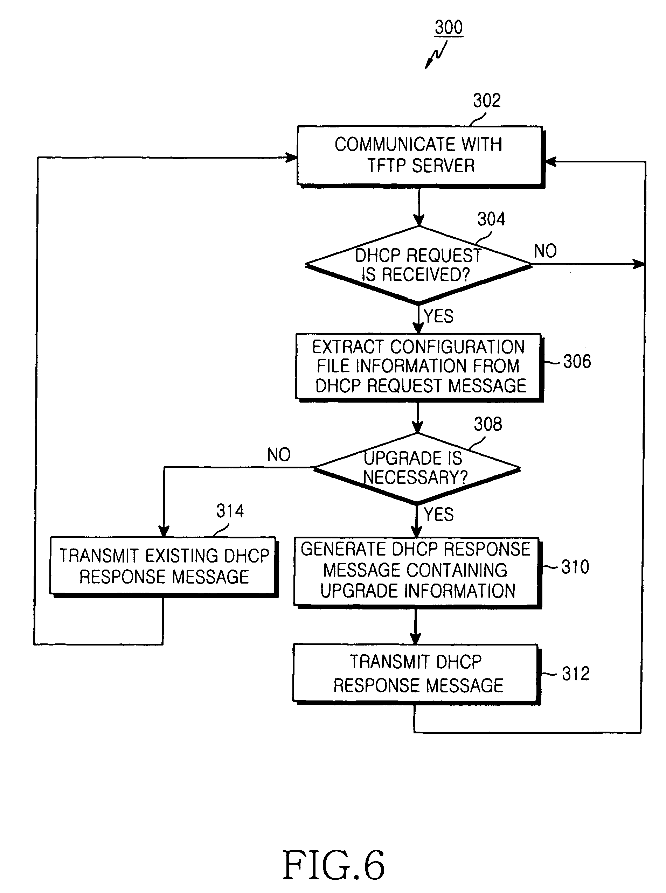

Hereinafter, control flow in the DHCP server 10 when a software of the UT 50 is upgraded will be described with reference to FIG. 6.

Referring to FIG. 6, in step 302, the DHCP server 10 periodically communicates with the TFTP server 30 and receives information on a configuration file of the latest version. When the configuration file is upgraded, the TFTP server 30 provides the DHCP server 10 with the configuration file information of the latest version.

Further, in step 304, the DHCP server 10 determines whether or not a DHCP request message is received from the UT 50. The UT 50 generates the DHCP request message requesting an IP address for Internet access or certification for using an already assigned IP address and transmits the generated DHCP request message to the DHCP server 10.

When receiving the DHCP request message from the UT 50, the DHCP server 10 extracts the configuration file information of the UT 50 from the DHCP request message in step 306. Further, the DHCP server 10 determines whether or not the version of the configuration file of the UT 50 is the latest version with reference to the extracted configuration file information. That is, the DHCP server 10 determines whether or not a software upgrade is necessary in the UT 50. When it is determined that the software upgrade is not necessary in the UT 50, the DHCP server 10 transmits the existing DHCP response message to the UT 50, in step 314.

Meanwhile, when the configuration file of the UT 50 is not a configuration file of the latest version, the DHCP server 10 generates a DHCP response message containing configuration file information of the latest version in step 310. In addition, when receiving the DHCP request message requesting certification for using an IP address, the DHCP server 10 generates an ACK message or an NACK message.

That is, the DHCP server 10 inserts the configuration file information of the latest version into the file field of the DHCP response message. Further, the DHCP server 10 inserts the IP address of the TFTP server 30 into the DHCP response message and transmits the DHCP response message to the UT 50 in step 312.

The present invention simplifies and enhances the management of a centralized server when performing a software upgrade of a UT by a centralized server in a cellular network.

Furthermore, in the present invention, the software of a UT is upgraded through a DHCP server managing the configuration file information of the user terminal and a TFTP server storing a configuration file of the latest version, thereby reducing the load and enabling easy management as compared with a case in which software is upgraded through one server.

In the aforementioned embodiment, a DHCP server assigns an IP address. Moreover, any server capable of assigning an IP address can be used. Additionally, in the aforementioned embodiment, a TFTP server transmits data for software upgrade. Furthermore, any server capable of transmitting data to a UT can be used.

Although a preferred embodiment of the present invention has been described for illustrative purposes, those skilled in the art will appreciate that various modifications, additions and substitutions are possible, without departing from the scope of the invention as disclosed in the accompanying claims.

## Claims

1. A communication system for software upgrade comprising:
a user terminal (50) with means for transmitting an Internet Protocol address assignment request message containing software information of the user terminal;
an upgrade-providing server (30) including upgrade data regarding software of the user terminal; and
a first server (10) with means for determining whether a software upgrade of the user terminal is necessary with reference to the software information when the request message is received, and with means for transmitting an address and upgrade information of the upgrade-providing server (30) to the user terminal when the software upgrade is necessary.

2. The communication system for software upgrade as claimed in claim 1, wherein the user terminal receives the address of the upgrade-providing server from the first server, connects to the corresponding upgrade-providing server, and receives the upgrade data.

3. The communication system for software upgrade as claimed in claim 1 or 2, wherein the user terminal receives the upgrade information of the upgrade-providing server from the first server, connects to the corresponding upgrade-providing server, and receives the upgrade data.

4. The communication system for software upgrade as claimed in one of claims 1 to 3, wherein the upgrade-providing server provides (101) the first server with information on the software upgrade when the software upgrade is performed.

5. The communication system for software upgrade as claimed in one of claims 1 to 4, wherein the upgrade information includes a name of a configuration file of a latest software version.

6. The communication system for software upgrade as claimed in one of claims 1 to 5, wherein the software includes a configuration file.

7. A user terminal (50) for upgrading software in a communication system, the user terminal comprising:
a controller (52) for generating and transmitting a Dynamic Host Configuration Protocol, DHCP, request message containing software information when a DHCP processing request is generated (202), receiving (208) a DHCP response message containing an address of an upgrade-providing server, and connecting to the upgrade-providing server (212) to receive upgrade data, when it is determined that upgrade of the software is necessary with reference to the software information; and
a memory (58) for storing the software and related information.

8. The user terminal as claimed in claim 7, wherein the DHCP response message further contains upgrade information of an upgrade-providing server.

9. The user terminal as claimed in claim 7 or 8, wherein the upgrade-providing server includes a Trivial File Transfer Protocol, TFTP, server (30).

10. A method for upgrading software of a user terminal (50) in a communication system including a first server, the method comprising the steps of:
inserting software information into a Dynamic Host Configuration Protocol, DHCP, request message when a DHCP processing request is generated (102), and transmitting (104) the DHCP request message to the first server; and
connecting to an upgrade-providing server based on an address of the upgrade-providing server received from the first server, and receiving upgrade data (120), when it is determined that upgrade of the software is necessary with reference to the software information.

11. The method as claimed in claim 10, further comprising the steps of:
determining (308) by the first server whether upgrading the software of the user terminal (50) is necessary with reference to the software information when a DHCP request message is received (304) from the user terminal (50); and
transmitting by the first server the address of the upgrade-providing server, which provides the upgrade data, to the user terminal (50) when the software upgrade is necessary.

12. The method as claimed in claim 10 or 11, further comprising the step of providing (101) by the upgrade-providing server information on the software upgrade to the first server when the software upgrade is performed.

13. The method as claimed in one of claims 10 to 12, wherein the upgrade data includes a name of a configuration file of a latest software version.

14. The method as claimed in claim 11, wherein the first server includes a Dynamic Host Configuration Protocol, DHCP, server (10).

15. The method as claimed in claim 11, wherein the upgrade-providing server providing the upgrade data includes a Trivial File Transfer Protocol, TFTP, server (30).

16. The method as claimed in one of claims 10 to 15, wherein the upgrade-providing server provides the first server with configuration file information of a latest software version when a configuration file has been upgraded.

17. The method as claimed in one of claims 10 to 16, further including the step of:
transmitting by the first server upgrade information of the upgrade-providing server, which provides the upgrade data, to the user terminal (50) when the software upgrade is necessary.

## Patentansprüche

1. Kommunikationssystem für Software-Upgrade, das umfasst:
ein Benutzer-Endgerät (50) mit einer Einrichtung zum Senden einer Nachricht zum Anfordern der Zuweisung einer Internet-Protokoll-Adresse, die Software-Informationen des Benutzer-Endgerätes enthält;
einen Upgrade-Bereitstellungs-Server (30), der Upgrade-Daten bezüglich der Software des Benutzer-Endgerätes enthält; und
einen ersten Server (10) mit einer Einrichtung, die unter Bezugnahme auf die Software-Informationen feststellt, ob ein Software-Upgrade des Benutzer-Endgerätes erforderlich ist, wenn die Anforderungsnachricht empfangen wird, und mit einer Einrichtung, die eine Adresse und Upgrade-Informationen des Upgrade-Bereitstellungs-Servers (30) zu dem Benutzer-Endgerät sendet, wenn das Software-Upgrade erforderlich ist.

2. Kommunikationssystem für Software-Upgrade nach Anspruch 1, wobei das Benutzer-Endgerät die Adresse des Upgrade-Bereitstellungs-Servers von dem ersten Server empfängt, Verbindung mit dem entsprechenden Upgrade-Bereitstellungs-Server herstellt und die Upgrade-Daten empfängt.

3. Kommunikationssystem für Software-Upgrade nach Anspruch 1 oder 2, wobei das Benutzer-Endgerät die Upgrade-Informationen des Upgrade-Bereitstellungs-Servers von dem ersten Server empfängt, Verbindung mit dem entsprechenden Upgrade-Bereitstellungs-Server herstellt und die Upgrade-Daten empfängt.

4. Kommunikationssystem für Software-Upgrade nach einem der Ansprüche 1 bis 3, wobei der Upgrade-Bereitstellungs-Server dem ersten Server Informationen über das Software-Upgrade bereitstellt (101), wenn das Software-Upgrade durchgeführt wird.

5. Kommunikationssystem für Software-Upgrade nach einem der Ansprüche 1 bis 4, wobei die Upgrade-Informationen einen Namen einer Konfigurationsdatei einer neuesten Software-Version enthalten.

6. Kommunikationssystem für Software-Upgrade nach einem der Ansprüche 1 bis 5, wobei die Software eine Konfigurationsdatei enthält.

7. Benutzer-Endgerät (50) zum Durchführen von Upgrade von Software in einem Kommunikationssystem, wobei das Benutzer-Endgerät umfasst:
eine Steuereinheit (52) zum Erzeugen und Senden einer DHCP (Dynamic Host Configuration Protocol)-Anforderungsnachricht, die Software-Informationen enthält, wenn eine DHCP-Verarbeitungsanforderung erzeugt wird (202), zum Empfangen (208) einer DHCP-Antwortnachricht, die eine Adresse eines Upgrade-Bereitstellungs-Servers enthält, und zum Herstellen von Verbindung mit dem Upgrade-Bereitstellungs-Server (212), um Upgrade-Daten zu empfangen, wenn unter Bezugnahme auf die Software-Informationen festgestellt wird, dass Upgrade der Software notwendig ist; und
einen Speicher (58) zum Speichern der Software und damit zusammenhängender Informationen.

8. Benutzer-Endgerät nach Anspruch 7, wobei die DHCP-Antwortnachricht des Weiteren Upgrade-Informationen eines Upgrade-Bereitstellungs-Servers enthält.

9. Benutzer-Endgerät nach Anspruch 7 oder 8, wobei der Upgrade-Bereitstellungs-Server einen TFTP (Trivial File Transfer Protocol)-Server (30) enthält.

10. Verfahren zum Upgrade von Software eines Benutzer-Endgerätes (50) in einem Kommunikationssystem, das einen ersten Server enthält, wobei das Verfahren die folgenden Schritte umfasst:
Einfügen von Software-Informationen in eine DHCP (Dynamic Host Configuration Protocol)-Anforderungsnachricht, wenn eine DHCP-Anforderungsnachricht erzeugt wird (102), und
Senden (104) der DHCP-Anforderungsnachricht zu dem ersten Server; und
Herstellen von Verbindung mit einem Upgrade-Bereitstellungs-Server auf Basis einer von dem ersten Server empfangenen Adresse des Upgrade-Bereitstellungs-Servers, und Empfangen von Upgrade-Daten (120), wenn unter Bezugnahme auf die Software-Informationen festgestellt wird, dass Upgrade der Software notwendig ist.

11. Verfahren nach Anspruch 10, das des Weiteren die folgenden Schritte umfasst:
unter Bezugnahme auf die Software-Informationen Feststellen (308), ob Upgrade der Software des Benutzer-Endgerätes (50) erforderlich ist, durch den ersten Server, wenn eine DHCP-Anforderungsnachricht von dem Benutzer-Endgerät (50) empfangen wird (304); und
Senden der Adresse des Upgrade-Bereitstellungs-Servers, der die Upgrade-Daten bereitstellt, durch den ersten Server zu dem Benutzer-Endgerät (50), wenn das Software-Upgrade erforderlich ist.

12. Verfahren nach Anspruch 10 oder 11, das des Weiteren den Schritt des Bereitstellens (101) von Informationen über das Software-Upgrade für den ersten Server durch den Upgrade-Bereitstellungs-Server umfasst, wenn das Software-Upgrade durchgeführt wird.

13. Verfahren nach einem der Ansprüche 10 bis 12, wobei die Upgrade-Daten einen Namen einer Konfigurationsdatei einer neuesten Software-Version enthalten.

14. Verfahren nach Anspruch 11, wobei der erste Server einen DHCP (Dynamic Host Configuration Protocol)-Server (10) enthält.

15. Verfahren nach Anspruch 11, wobei der Upgrade-Bereitstellungs-Server, der die Upgrade-Daten bereitstellt, einen TFTP (Trivial File Transfer Protocol)-Server (30) enthält.

16. Verfahren nach einem der Ansprüche 10 bis 15, wobei der Upgrade-Bereitstellungs-Server dem ersten Server Konfigurationsdatei-Informationen einer neuesten Software-Version bereitstellt, wenn Upgrade einer Konfigurationsdatei durchgeführt worden ist.

17. Verfahren nach einem der Ansprüche 10 bis 16, das des Weiteren den folgenden Schritt einschließt:
Senden von Upgrade-Informationen des Upgrade-Bereitstellungs-Servers, der die Upgrade-Daten bereitstellt, durch den ersten Server zu dem Benutzer zu dem Benutzer-Endgerät (50), wenn das Software-Upgrade erforderlich ist.

## Revendications

1. Système de communication pour une mise à niveau de logiciel comprenant :
un terminal (50) d'utilisateur avec un moyen destiné à transmettre un message de requête d'affectation d'adresse de protocole Internet contenant des informations de logiciel du terminal d'utilisateur ;
un serveur (30) de fourniture de mise à niveau comportant des données de mise à niveau concernant un logiciel du terminal d'utilisateur ; et
un premier serveur (10) avec un moyen destiné à déterminer si une mise à niveau de logiciel du terminal d'utilisateur est nécessaire par rapport aux informations de logiciel lorsque le message de requête est reçu, et avec ce moyen à transmettre des informations d'adresse et de mise à niveau du serveur de fourniture de mise à niveau au terminal d'utilisateur lorsque la mise à niveau de logiciel est nécessaire.

2. Système de communication pour une mise à niveau de logiciel selon la revendication 1, dans lequel le terminal d'utilisateur reçoit l'adresse du serveur de fourniture de mise à niveau à partir du premier serveur, se relie au serveur de fourniture de mise à niveau correspondant, et reçoit les données de mise à niveau.

3. Système de communication pour une mise à niveau de logiciel selon la revendication 1 ou 2, dans lequel le terminal d'utilisateur reçoit les informations de mise à niveau du serveur de fourniture de mise à niveau à partir du premier serveur, se relie au serveur de fourniture de mise à niveau correspondant, et reçoit les données de mise à niveau.

4. Système de communication pour une mise à niveau de logiciel selon l'une des revendications 1 à 3, dans lequel le serveur de fourniture de mise à niveau fournit (101) au premier serveur des informations sur la mise à niveau de logiciel lorsque la mise à niveau de logiciel est effectuée.

5. Système de communication pour une mise à niveau de logiciel selon l'une des revendications 1 à 4, dans lequel les informations de mise à niveau comportent un nom d'un fichier de configuration d'une dernière version de logiciel.

6. Système de communication pour une mise à niveau de logiciel selon l'une des revendications 1 à 5, dans lequel le logiciel comporte un fichier de configuration.

7. Terminal (50) d'utilisateur destiné à mettre à niveau un logiciel dans un système de communication, le terminal d'utilisateur comprenant :
un contrôleur (52) destiné à produire et transmettre un message de requête de protocole de configuration d'hôte, DHCP, contenant des informations de logiciel lorsqu'une requête de traitement de DHCP est produite (202), recevoir (208) un message de réponse de DHCP contenant une adresse d'un serveur de fourniture de mise à niveau, et se raccorder au serveur (212) de fourniture de mise à niveau pour recevoir des données de mise à niveau, lorsque l'on détermine que la mise à niveau du logiciel est nécessaire par rapport aux informations de logiciel ; et
une mémoire (58) destinée à stocker le logiciel et les informations associées.

8. Terminal d'utilisateur selon la revendication 7, dans laquelle le message de réponse de DHCP comporte de plus des informations de mise à niveau d'un serveur de fourniture de mise à niveau.

9. Terminal d'utilisateur selon la revendication 7 ou 8, dans lequel le serveur de fourniture de mise à niveau comporte un serveur (30) de protocole basique de transfert de fichiers, TFTP.

10. Procédé destiné à mettre à niveau un logiciel d'un terminal (50) d'utilisateur dans un système de communication comportant un premier serveur, le procédé comprenant les étapes :
d'insertion d'informations de logiciel dans un message de requête de protocole de configuration d'hôte, DHCP, lorsqu'une requête de traitement de DHCP est produite (102), et de transmission (104) du message de requête de DHCP au premier serveur, et
de raccordement à un serveur de fourniture de mise à niveau sur la base d'une adresse du serveur de fourniture de mise à niveau reçu à partir du premier serveur, et de réception des données (120) de mise à niveau, lorsque l'on détermine qu'une mise à niveau du logiciel est nécessaire par rapport aux informations de logiciel.

11. Procédé selon la revendication 10, comprenant de plus les étapes :
de détermination (308) par le premier serveur si la mise à niveau du logiciel du terminal (50) d'utilisateur est nécessaire par rapport aux informations de logiciel lorsqu'un message de requête de DHCP est reçu (304) à partir du terminal (50) d'utilisateur ; et
de transmission, par le premier serveur, de l'adresse du serveur de fourniture de mise à niveau, qui fournit les données de mise à niveau, au terminal (50) d'utilisateur lorsque la mise à niveau de logiciel est nécessaire.

12. Procédé selon la revendication 10 ou 11, comprenant de plus l'étape de fourniture (101), par le serveur de fourniture de mise à niveau, d'informations concernant la mise à niveau de logiciel au premier serveur lorsque la mise à niveau de logiciel est effectuée.

13. Procédé selon l'une des revendications 10 à 12, dans lequel les données de mise à niveau comportent un nom d'un fichier de configuration d'une dernière version de logiciel.

14. Procédé selon la revendication 11, dans lequel le premier serveur comporte un serveur (10) de protocole de configuration d'hôte, DHCP.

15. Procédé selon la revendication 11, dans lequel le serveur de fourniture de mise à niveau fournissant les données de mise à niveau comporte un serveur (30) de protocole basique de transfert de fichiers, TFTP.

16. Procédé selon l'une des revendications 10 à 15, dans lequel le serveur de fourniture de mise à niveau fournit au premier serveur des informations de fichier de configuration d'une dernière version de logiciel lorsqu'un fichier de configuration a été mis à niveau.

17. Procédé selon l'une des revendications 10 à 16, comprenant de plus l'étape :
de transmission, par le premier serveur, d'informations de mise à niveau du serveur de fourniture de mise à niveau, qui fournit les données de mise à niveau, au terminal (50) d'utilisateur lorsque la mise à niveau de logiciel est nécessaire.
